Europäisches Patentamt

(19) European Patent Office

Office européen des brevets

(11) Publication number : **0 149 780 B1**

## EUROPEAN PATENT SPECIFICATION

(45) Date of publication of patent specification :
31.08.94 Bulletin 94/35

(51) Int. Cl.⁵ : **G09G 1/16,** G09G 1/00

(21) Application number : 84115020.4

(22) Date of filing : 11.12.84

(54) Attribute hierarchy system.

(30) Priority : 24.01.84 US 573394

(43) Date of publication of application :
31.07.85 Bulletin 85/31

(45) Publication of the grant of the patent :
31.08.94 Bulletin 94/35

(84) Designated Contracting States :
DE FR GB

(56) References cited :
US-A- 4 158 837
US-A- 4 317 114
US-A- 4 418 343
IBM TECHNICAL DISCLOSURE BULLETIN,
vol. 24, no. 1B, June 1981, page 667, New York,
US; E.G. BROOKS et al.: "Data Terminal using
table lookup for display attributes"

(56) References cited :
IBM TECHNICAL DISCLOSURE BULLETIN,
vol. 21, no. 1, June 1978, pages 295, 296, New
York, US; L.W. NICHOLSON et al.: "Attribute
controller display modification"
MICROPROCESSORS: Fundamentals & Appli-
cations, 1977, pages 15 - 19, IEEE, New York,
US; E.A. Torrero: "An Introduction to Microp-
rocessors"

(73) Proprietor : **International Business Machines
Corporation
Old Orchard Road
Armonk, N.Y. 10504 (US)**

(72) Inventor : **Luck, Melvin Richard
922 2bt Street S.E.
Rochester Minnesota 55904 (US)**
Inventor : **Pavicic, Mark Joseph
2526 23 rd Avenue N.W.
Rochester Minnesota 55901 (US)**

(74) Representative : **Vekemans, André
Compagnie IBM France
Département de Propriété Intellectuelle
F-06610 La Gaude (FR)**

## Description

This invention relates to video displays for alphanumeric data, and more particularly pertains an attribute hierarchy system providing levels of attributes and commands for controlling the attribute levels.

In the field of alphanumeric video displays, an "attribute" is a modifiable aspect of a displayed character, such as blinking, intensified, reverse video, underlined, and protected against overwriting.

The prior art has been oriented toward utilizing holding buffers in conjunction with current-attribute buffers for storing an attribute code or codes until called for. This type of software programming and hardware architecture has not provided for any program control as the operation is predetermined. The prior art with considerable brute-force techniques would allow for underlining characters or striking out characters, various types of formatting of material in a text, and any of the other attributes as performed in the prior art operations.

The prior art required that the old attribute had to be respecified at the end of the field, which required considerable storage for attributes as previously utilized. Further, there was considerable software searching the data to find the last valid attribute, which not only required additional storage, but also required additional time, both of the storage hardware and software searching time leading to inefficient data processing.

The present invention overcomes the disadvantages of the prior art by providing hardware assist controlled by software reducing the number of bytes for levels of attributes and commands to control the attribute levels.

The present invention provides hardware assisted by software in storing levels of attributes and generating command signals to move the levels in being pushed down into or popped up into a stack, such as defined in "Microprocessors: Fundamentals & Applications", 1977, pages 15 to 19, IEEE, New York. The levels of attributes and commands to control the attribute levels can be expanded accordingly, dependent upon the number of bytes available in the system. This system provides handling, control, and implementation of attribute hierarchy, reducing display storage requirements including bandwidth and size, and reduces the required software to manage the attributes.

The principal object of the invention is to provide a display system as defined in claim 1.

According to one embodiment of the present invention, an "n" position stack is provided with hardware logic flow which specifies loading of an attribute when entering a new attribute field, each attribute is pushed down into the stack, and the previous attribute does not have to be respecified at the end of the field. A pop-up command to the stack restores the preceding attribute to its previous level. The level of the "stack" determines the levels of attribute hierarchy. The hardware logic flow assisted by the software determines the use of any "end" attribute levels. A set of commands provides the required hardware-software interface providing that the software controls the stack and the hardware attributing process through the hardware logic flow. A set of commands and functions provides hardware control through the software for keying, loading, and specifying end of field. A plurality of stacks can be provided where each stack can also have a plurality of levels.

One significant aspect and feature of the present invention is that this attribute hierarchy system providing hardware assisted by software is applicable to the industry standard attributes, such as color, reversing, underscoring, blinking, blanking, and intensity, as well as the more complex attributes including over-striking of characters, changing box width or box height, magnification, and other attributes.

Another significant aspect and feature of the present invention is an attribute hierarchy system which reduces the amount of disk storage space, saves required storage, and saves software time in the software controlling the hardware.

Fig. 1 illustrates the hardware for the attribute hierarchy system;

Fig. 2 illustrates the hardware logic flow for the attribute hierarchy system in Fig. 1;

Fig. 3 illustrates hardware logic flow for operations to stack including pop and push;

Fig. 4 illustrates hardware logic flow for operation to stack/load; and,

Fig. 5 illustrates hardware logic flow for the stack copy controller.

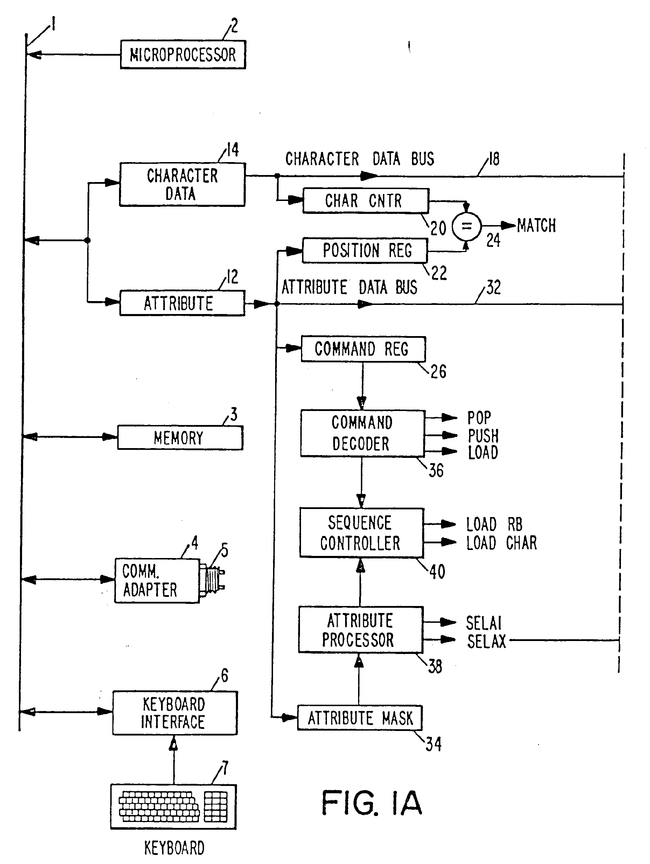

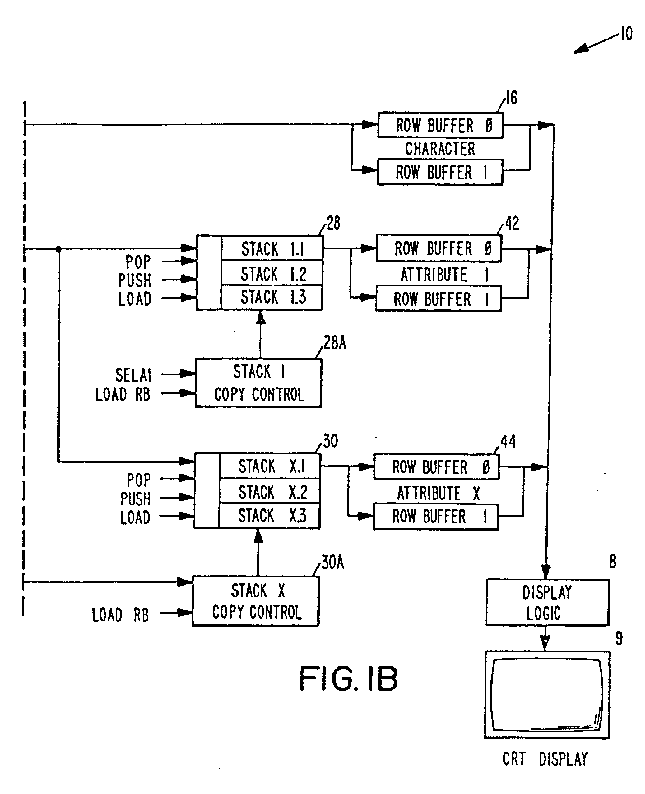

Fig. 1 illustrates a microprocessor-controlled video display terminal for alphanumeric data. The conventional portion of the terminal has a data/address/control bus 1 for connecting a microprocessor 2, or storage 3 for read/write and read-only, a communications adapter 4 connected to a host data processor via a cable 5, and a keyboard interface 6 for receiving input data from a keyboard 7. Display logic 8 provides conventional timing and signal conversion functions for a raster-scanned cathode-ray-tube (CRT) display 9.

Attribute hierarchy hardware 10 according to the presentr invention is coupled between bus 1 and display logic 8. Character data storage 14 stores byte-length codes signifying the identities of the characters to be displayed on CRT 9, while attribute storage 12 stores byte-length codes specifying the attributes such as blinking, intensified, underlined, etc., with which the characters are to be displayed.

The storages 12 and 14 can be included in the same storage. Row buffers 16 receive characters from the storage 14 through the character data bus 18 for subsequent display or to display logic. A match signal is generated, when to aplly an attribute, through signals from a character counter 20, a position register 22, and an

2

AND gate 24. Command register 26 receives a command preceding each attribute string whereupon the attributes go to a stack 28, the first stack in this example. Any number of stacks can be provided and the last stack would be designated stack 30, by way of example and for purposes of illustration only, and not to be construed as limiting of the present invention. In this particular example, for purposes of illustration, a three-level stack has been illustrated, but any number of levels can be provided. Attribute data bus 32 carries the attributes to the stacks 28 and 30. Attribute mask 34 provides signals as to what attributes follow and how many attributes follow. Command decoder 36 and attribute processor 38 feed to the sequence controller 40 which provides load row buffer and load character signals. For purposes of definition, "push" means that an attribute is moved from stack 1.1 to stack 1.2 and "pop" means that an attribute is moved from stack 1.2 to 1.1. Stack copy control 28a and 30a is evaluated whenever a load signal is received by the stacks 28 and 30 respectively. Row buffers 42 and 44 connect respectively to the outputs of the stacks and connect to the display logic. In the alternative, the stacks could drive a display accordingly.

A set of commands provides the hardware with logic flow through the software assist for controlling the stack and hardware attribute processing. In this particular example, a set of eight command signals is optimal for hardware and software of the attribute hierarchy system. The commands provide for proper hardware control through the software by the use of three efficiently coded bits. A list of commands and functions follows:

## KEY

```
L     Load attributes (only attributes 1-4)
LL    Load attribute Long (any attributes 1-31)
*     Load character data Load Row Buffer
```

## DECODE

| | | | |
|---|---|---|---|
| | 000 | N | No op |
| | 001 | U | Pop Up |
| | 010 | LLD | Load attribute Long and push Down |
| | 011 | LD | Load attribute and pusch Down |
| LOAD | 100 | LL*U | Load attribute Long, Load Char RB, and pop Up |
| CMDS | | | |
| | 101 | L*U | Load attribute, Load Char RB, and pop Up |
| | 110 | LL* | Load attribute Long and load Char RB |
| | 111 | L* | Load attribute and load Char RB |

One additional bit is used to determine the end of the command string. The end of string (EOS) flag allows several commands to appear in one string.

| FUNCTION | COMMAND USED |
|---|---|
| | |
| Specifying Attributes: | |
|     Viewport Screen, or | LD or LLD |
|     Default | |
| | |
| Field | LD or LLD |
| | |
| Character (Single Position) | L* or LL* |
| | |
| Specifying End of Field: | |
|     Field only | U or L*U or LL*U |
| | |
| Field and Character | L*U Or LL*U |

The command, attribute mask, and attributes are combined and compressed into an attribute string which is stored by the attribute memory 12. The first byte of each attribute string is a position number corresponding to the position in the data memory for which that attribute string is to be applied. When a match occurs between the character data counter 20 and the position register 22 the command and attribute mask are outputted. That attribute mask determines the attributes which follow while the attribute processor 38 controls the loading of the attributes. Command decoder 36 of the command register 26 determines the operations of PUSH, POP, and LOAD for the stacks 28 and 30. The sequence controller 40 with inputs from the attribute processor 38 and the command decoder 36 determines the sequence of operation when to parallel load all of the attributes and the character into the row buffers 42 and 44. The stack controls 28A and 30A flag for each stack when a valid load has occurred, but if no load occurred, the stacks automatically default and a copy operation takes place.

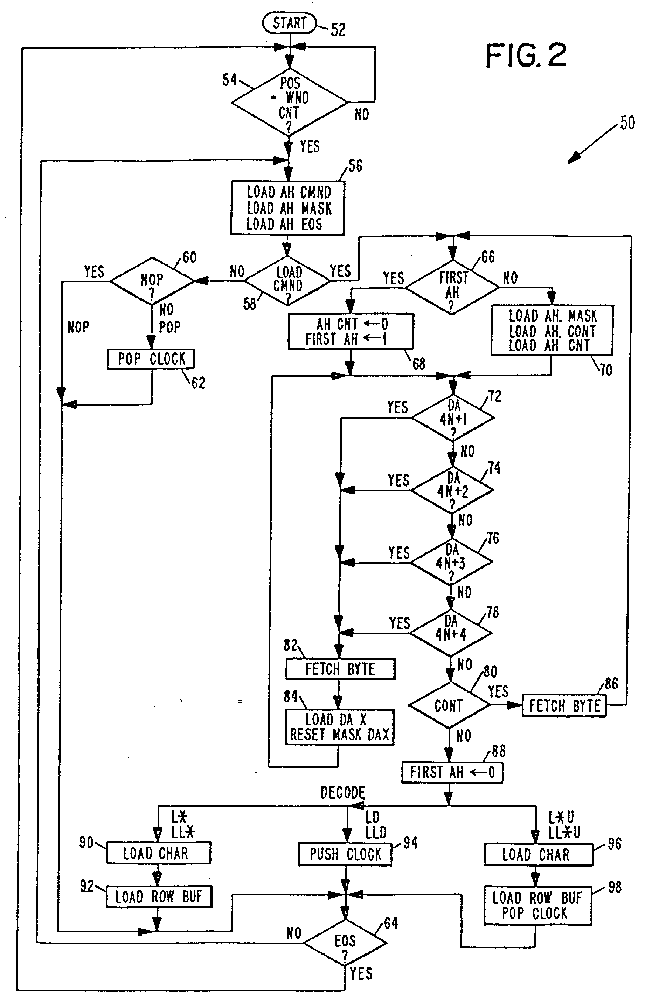

Fig. 2 illustrates a hardware logic flow for the command decoder and sequence controller 50 for the attribute hierarchy system. At the start 52, hardware receives position, command, and character count at box 54. Box 56 receives the load command, the masking which includes the attributes and how many attributes follow, and a single bit end of string flag at the end of the command string which allows several commands to appear in one string. At load command box 58, a "No" decision precedes through the NO operation 60, the pop clock, and the end of string 64 accordingly. On a "Yes" load command, attribute processing masking logic include boxes 66-88 for attribute processing and masking. The first attribute header determines the processing by box 68 or 70, and the data attribute determines the processing by boxes 72-80. Boxes 82 and 84 fetch the byte, can load the data attribute in box 84, and reset the mask. Depending upon the particular load command, boxes 90-98 determine the load character, load row buffer, and pushing or popping the attribute through the load buffer.

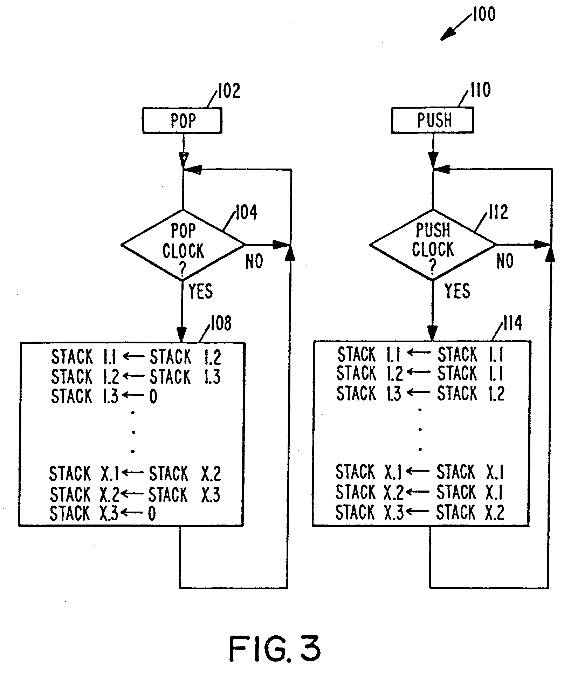

Fig. 3 illustrates a hardware logic flow chart 100 for the operations to stack for POP and PUSH. The flow chart assumes a three-level stack, by way of example and for purposes of illustration only and not to be construed as limiting of the invention. A pop command 102 will require a pop clock 104 to move an attribute in the stack, as illustrated in 108. Likewise, a push command 110 requires a push signal 112 moving the attribute in the stack 114 accordingly.

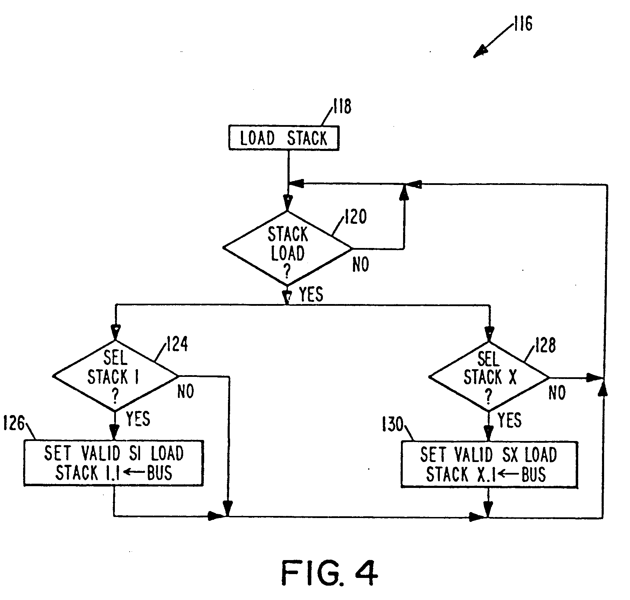

Fig. 4 illustrates a hardware logic flow chart 116 for operations to stack-load. The command decoder 36 provides a load signal 118 for loading the stack 120 depending on which stack is selected. One or more of the stacks 20 to 30 can be loaded as determined by SEL Stack 1 to SEL Stack X. Accordingly, a valid load signal

EP 0 149 780 B1

is set by 126 and 130 for stacking.

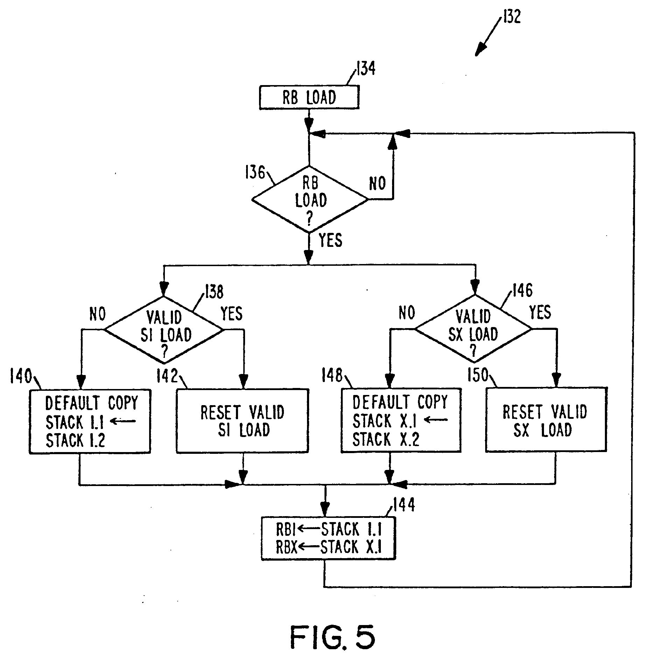

Fig. 5 illustrates a hardware logic flow chart 132 for the stack copy control 28A and 30A for loading the row buffer 16, 42, and 44. On row buffer load signal 136, a valid load decision 138, determine whether a default copy is to occur. Default copy 140 provides an automatic positional attribute which defaults to the next level up, where 142 provides reset of the valid stack 1 load. Box 144 provides for the stacking in the appropriate row buffer. Decisions of 146, 148, and 150 correspond for the appropriate valid loading, default copy with a copy operation occuring and reset valid loading accordingly, providing a stack control flag.

## Claims

1. Display system having attribute commands for modifying appearances of displayed data by attributes, characterized in that it comprises:
   a. a stack means (28, 30) for storing a plurality of attributes,
   b. leveling means (34) for generating levels of attributes in said stacking means; and
   c. command means (36, 38, 40) for generating command signals for moving said attributes through levels in said stack means whereby each of said command signals precede said levels of attributes.

2. System of claim 1 characterized in that it further comprises:
   a. loading means (32) for loading attributes in said stack means;
   b. pushing means for pushing said levels of attributes down in said stack means; and
   c. popping means for popping up said level of attributes in said stack means.

3. System of claim 1 characterized in that said command signals means codes said signals into three bits.

4. System of claim 1 characterized in that it comprises flag means for generating an end of command string bit.

5. Display system, having an attribute hierarchy comprising:
   a. storage means (14) circuitry for character data;
   b. buffering means (16) for said stored character data and bus means (18) for transferring said character data to said buffering means;
   c. storage means (12) for attributes;
   d. signal generation means (20, 22) connected to said character storage means and said attribute storage means for generating a metch signal, characterized in that it further comprises:
      a. bus means (32) for transferring said attributes and connected to said attribute storage means;
      b. register means (26) for registering command codes prior to said attributes and connected to said attribute bus means;
      c. masking means (34) for each attribute and number of attribute, and connected to said attribute bus means;
      d. decode means (36) for command decoding connected to said command register means and generating pop, push, and load signals;
      e. processor means (38) for attribute processing and connected to said attribute masking means, and generating a stack select signal;
      f. sequence means (40) for sequence controlling and connected between said decode means and said processor means, and generating load row buffer and load character signals;
      g. stacking means (28, 30) for said attributes and connected to said attribute storage means through said attribute bus means, said stack means receiving said pop, push, and load signals;
      h. means (28A, 30A) for evaluating each attribute load, and- connected between said sequence means and said stacking means; and
      i. buffering means (42, 44) for said stacked attributes.

6. System of claim 5 characterized in that said stacking means comprises a plurality of stacking means connected to said attribute data bus means.

7. System of claim 5 characterized in that each of said stack means includes a plurality of levels.

5

**Patentansprüche**

1. Anzeigesystem, das Attributbefehle aufweist zum Modifizieren der Erscheinungsbilder von angezeigten Daten durch Attribute, dadurch gekennzeichnet, daß es umfaßt:

a. eine Puffereinrichtung (28, 30) zum Speichern einer Anzahl von Attributen,

b. Stufenmittel (34) zum Erzeugen von Stufen der Attribute in der Puffereinrichtung und

c. Befehlsmittel (36, 38, 40) zum Erzeugen von Befehlssignalen zum Übertragen der Attribute durch die Stufen in der Puffereinrichtung, wodurch jedes der Befehlssignale den Stufen der Attribute vorangeht.

2. System nach Anspruch 1, dadurch gekennzeichnet, daß es weiter umfaßt:

a. Lademittel (32) zum Laden von Attributen in die Puffereinrichtung,

b. Mittel zum Zurückstellen, um die Stufen der Attribute in der Puffereinrichtung nach unten zu übertragen und

c. Mittel zum Voranstellen, um die Stufen der Attribute in der Puffereinrichtung nach oben zu übertragen.

3. System nach Anspruch 1, dadurch gekennzeichnet, daß das Mittel für die Befehlssignale die Signale in drei Bits codiert.

4. System nach Anspruch 1, dadurch gekennzeichnet, daß es Markiermittel umfaßt zum Erzeugen eines Bits für das Ende einer Befehlskette.

5. Anzeigesystem, das eine Hierarchie der Attribute aufweist und umfaßt:

a. die Schaltung einer Speichereinrichtung (14) für Zeichendaten,

b. eine Puffereinrichtung (16) für die gespeicherten Zeichendaten und eine Buseinrichtung (18) zum Übertragen der Zeichendaten zu der Puffereinrichtung,

c. eine Speichereinrichtung (12) für Attribute,

d. Signalerzeugungsmittel (20, 22), die mit der Zeichen-Speichereinrichtung und der Attribut-Speichereinrichtung verbunden sind zum Erzeugen eines Übereinstimmungssignals, dadurch gekennzeichnet, daß es weiter umfaßt:

a. eine Buseinrichtung (32) zum Übertragen der Attribute, die mit der Attributspeichereinrichtung verbunden ist,

b. eine Registereinrichtung (26) zum Registrieren von Befehlscodes vor den Attributen, die mit der Attribut-Buseinrichtung verbunden ist,

c. eine Maskiereinrichtung (34) für jedes Attribut und jede Zahl von Attributen, die mit der Attribut-Buseinrichtung verbunden ist,

d. eine Decodiereinrichtung (36) für das Decodieren von Befehlen, die an die Befehlsregistereinrichtung angeschlossen ist und Signale zum Voranstellen, Zurückstellen und zum Laden erzeugt,

e. eine Prozessoreinrichtung (38) für das Verarbeiten der Attribute, die mit der Einrichtung für das Maskieren der Attribute verbunden ist und ein Signal zur Auswahl eines Puffers erzeugt,

f. eine Reihenfolge-Einrichtung (40) zur Steuerung der Reihenfolge, die zwischen der Decodiereinrichtung und der Prozessoreinrichtung angeschlossen ist und Signale für das Laden des Zeilenpuffers und das Laden der Zeichen erzeugt,

g. Puffermittel (28, 30) für die Attribute, die mit der Attribut-Speichereinrichtung über die Attribut-Buseinrichtung verbunden ist, wobei die Puffereinrichtung die Signale zum Voranstellen, Zurückstellen und zum Laden empfängt.

h. Mittel (28A, 30A) zum Auswerten jedes Ladens der Attribute, die zwischen der Reihenfolge-Einrichtung und der Puffereinrichtung angeschlossen sind, und

i. Puffermittel (42, 44) für die gestapelten Attribute.

6. System nach Anspruch 5, dadurch gekennzeichnet, daß die Puffereinrichtung eine Anzahl von Puffereinrichtungen umfaßt, die mit der Buseinrichtung für die Attributdaten verbunden sind.

7. System nach Anspruch 5, dadurch gekennzeichnet, daß jede der Puffereinrichtungen eine Anzahl von Stufen einschließt.

## Revendications

1. Système d'affichage comprenant des commandes d'attributs pour modifier l'aspect des données affichées par attributs, caractérisé en ce qu'il comprend :
   a. un système de piles (28, 30) pour mémoriser une pluralité d'attributs;
   b. un système de niveaux (34) pour générer des niveaux d'attributs dans ledit système de piles; et
   c. un dispositif de commande (36, 38, 40) pour générer des signaux de commande afin de déplacer les dits attributs le long des dits niveaux dans ledit système de piles, caractérisé en ce que chacun des dits signaux de commande précède les dits niveaux d'attributs.

2. Système selon la revendication 1, caractérisé en ce qu'il comprend, de plus :
   a. un dispositif de chargement (32) pour charger des attributs dans ledit système de piles;
   b. un dispositif refouleur pour repousser les dits niveaux d'attributs dans ledit système de piles; et
   c. un dispositif remonteur pour remonter les dits niveaux d'attributs dans ledit système de piles.

3. Système selon la revendication 1, caractérisé en ce que le dispositif de signaux de commande code les dits signaux en trois bits.

4. Système selon la revendication 1, caractérisé en ce qu'il comprend un dispositif indicateur pour générer un bit de fin de chaîne de commandes.

5. Système d'affichage caractérisé par une hiérarchie d'attributs et comprenant :
   a. un circuit de mémorisation (14) pour les données de caractères;
   b. une mémoire tampon (16) pour les dites données de caractères mémorisées et un bus (18) pour transférer les dites données de caractères dans ladite mémoire tampon;
   c. un dispositif de mémorisation (12) pour les attributs;
   d. un dispositif de génération de signal (20, 22) connecté au dit dispositif de mémorisation de caractères et au dit dispositif de mémorisation d'attributs pour générer un signal de correspondance, caractérisé en ce qu'il comprend, de plus :
      a. un bus (32) pour transférer les dits attributs, connecté au dit dispositif de mémorisation d'attributs;
      b. un registre (26) pour enregistrer des codes de commande avant les dits attributs, connecté au dit bus d'attributs;
      c. un dispositif de masquage (34) pour chaque attribut et numéro d'attribut, connecté au dit bus d'attributs;
      d. un dispositif de décodage (36) pour le décodage des commandes, connecté au dit registre de commandes et générant des signaux remonter, repousser et charger;
      e. un processeur (38) pour le traitement des attributs, connecté au dits dispositif de masquage d'attribut et générant un signal de sélection de pile;
      f. un contrôleur de séquence (40) pour contrôler la séquence, connecté entre ledit dispositif de décodage et ledit processeur et générant des signaux de chargement de mémoire tampon de ligne et de chargement de caractères;
      g. un dispositif d'empilage (28, 30) pour les dits attributs, connecté au dit dispositif de mémorisation d'attributs via ledit bus d'attributs, ledit dispositif d'empilage recevant les dits signaux remonter, repousser et charger;
      h. un dispositif (28A, 30A) pour évaluer chaque charge d'attributs, connecté entre ledit contrôleur de séquence et ledit dispositif d'empilage; et
      i. une mémoire tampon (42, 44) pour les dits attributs empilés.

6. Système selon la revendication 5, caractérisé en ce que ledit dispositif d'empilage comprend une pluralité de dispositifs d'empilage connectés au dit bus de données d'attributs.

7. Système selon la revendication 5, caractérisé en ce chacun des dits dispositifs d'empilage comprend une pluralité de niveaux.

FIG. IA

FIG. IB

FIG. 2

FIG. 3

116

118

LOAD STACK

120

STACK
LOAD
?

NO

YES

124

SEL
STACK I
?

NO

YES

126

SET VALID SI LOAD
STACK I.I ← BUS

128

SEL
STACK X
?

NO

YES

130

SET VALID SX LOAD
STACK X.I ← BUS

FIG. 4

FIG. 5